# EUROPÄISCHE PATENTSCHRIFT

(11) **EP 1 669 331 B1**
(45) Veröffentlichungstag und Bekanntmachung des Hinweises auf die Patenterteilung: **17.02.2010**
(21) Anmeldenummer: 05026887.9
(22) Anmeldetag: 08.12.2005
(51) Int. Cl.: C03C 23/00, C03B 32/00

(54) **Verfahren zur Herstellung eines nicht-beschlagenden Elements**
Process for production of an anti-fogging element
Procédé de fabrication d'élément antibué

(30) Priorität: 09.12.2004 US 634475 P
(43) Veröffentlichungstag der Anmeldung: 14.06.2006
(73) Patentinhaber: Flabeg GmbH & Co. KG, 93437 Furth im Wald (DE)
(72) Erfinder: Vogl, Stefan, 93468 Miltach (DE)
(74) Vertreter: Walkenhorst, Andreas

(56) Entgegenhaltungen:
- EP-A- 0 887 179
- EP-A- 1 254 870
- DE-A1- 10 351 467
- GB-A- 1 209 209
- JUNG C K, CHO S H, LEE S B, KIM T K, LEE M N, BOO J H: "Study of Improvement Technology of Photocatalytic Activity on the SiO2 Sol by Plasma Treatment after Dip-Coating Processing" SURFACE REVIEW AND LETTERS, Bd. 10, Nr. 4, 2003, Seiten 635-640, XP009064534
- PATENT ABSTRACTS OF JAPAN Bd. 2002, Nr. 10, 10. Oktober 2002 (2002-10-10) & JP 2002 159829 A (TOSHIBA HOME TECHNOLOGY CORP), 4. Juni 2002 (2002-06-04)
- PATENT ABSTRACTS OF JAPAN Bd. 1999, Nr. 11, 30. September 1999 (1999-09-30) & JP 11 169645 A (SEKISUI CHEM CO LTD), 29. Juni 1999 (1999-06-29)

## Beschreibung

Die Erfindung bezieht sich auf ein Verfahren zur Herstellung eines Elements, bei dem eine Oberflächenschicht aus einem photokatalytischen Material einem Aktivierungsschritt unterzogen wird.

In einer Vielzahl von Anwendungen von Gläsern, wie beispielsweise in Rückspiegeln oder Windschutzscheiben von Kraftfahrzeugen, bei Fensterscheiben von Gebäuden, bei Verkehrsspiegeln, für Linsen oder in Abdeckgläsern für Instrumente, ist es wünschenswert, das jeweilige Glas auch bei vergleichsweise niedrigen Umgebungstemperaturen und hoher Umgebungsfeuchtigkeit beschlagfrei zu halten. Für Gläser ist dies im Sinne der Herstellung eines nicht-beschlagenden Elements erreichbar, indem die Oberfläche mit einer Antibeschlags-Beschichtung versehen wird, die üblicherweise so genannte hydrophile oder super-hydrophile Eigenschaften aufweist.

Die Hydrophilie ist dabei beispielsweise anhand des so genannten Kontaktwinkels bestimmbar, den der Rand eines sich auf der Elementoberfläche befindlichen Wassertropfens mit der Elementoberfläche bildet. Im Falle unbeschichteter Gläser beträgt dieser Randwinkel üblicherweise etwa zwischen 40° und 60°. Von einer hydrophilen Oberfläche wird demgegenüber dann gesprochen, wenn der Randwinkel kleiner als etwa 20° ist. Bei großen Randwinkeln von beispielsweise mehr als 100° spricht man hingegen von hydrophoben Oberflächen. Die so genannte Super-Hydrophilie liegt hingegen vor, wenn der Rand- oder Kontaktwinkel weniger als etwa 10°, vorzugsweise weniger als etwa 5°, beträgt.

Eine in diesem Sinne hydrophile oder super-hydrophile Oberfläche eines Glases führt dazu, dass bei einer Benetzung mit Wasser, beispielsweise in Folge von Kondensation, aus den auftretenden Wassertropfen unmittelbar ein vergleichsweise homogener Wasserfilm gebildet wird. Im Gegensatz zur Anwesenheit von einzelnen, individualisierbaren Wassertropfen auf der Glasoberfläche, die insbesondere unregelmäßige Form und Größe aufweisen können, beeinflusst ein derartiger homogener Wasserfilm den Durchgang von Licht durch das Glas nur unwesentlich, so dass für den Benutzer keine nennenswerte Eintrübung oder Beeinträchtigung entsteht. Durch die Aufbringung einer hydrophilen Oberflächenbeschichtung kann ein Glas somit beschlagfrei im oben genannten Sinne gemacht werden.

Zu diesem Zweck, also zur Herstellung eines nicht-beschlagenden Elements durch Aufbringung einer hydrophilen Oberflächenbeschichtung auf ein Glas-Substrat, ist es beispielsweise aus der DE 296 23 901 U1 oder aus der EP 1 254 870 A2 bekannt, ein Substrat mit einer im Wesentlichen transparenten Beschichtung aus einem photokatalytischen Material, insbesondere mit Titandioxid (TiO₂), zu versehen. Das photokatalytische Material wirkt dabei derart, dass es die Oberfläche der Beschichtung hydrophil im oben genannten Sinne macht. Dabei wird vermutet, dass unter der photokatalytischen Wirkung des photokatalytischen Materials in Folge einer Bestrahlung mit Licht einer geeigneten Wellenlänge Hydroxylradikale (OH⁺), durch Folgereaktion Hydroperoxyradikale (HOO⁻) und Peroxylradikalanionen (O₂⁻) an der Oberfläche gebildet werden, die die an der Oberfläche der Beschichtung anhaftenden organisch chemischen Verbindungen oxidieren können. Hierbei wird in einer Reaktionskaskade, an der auch Wasser und Sauerstoff aus der Luft beteiligt sind, letztendlich Kohlendioxid und Wasser gebildet. Auf diese Weise wird die Oberfläche der Beschichtung von Fetten, Ölen oder sonstigen organisch chemischen Verunreinigungen befreit, so dass letztendlich nur physisorbiertes Wasser zusammen mit den endständigen OH-Gruppen der Beschichtung übrig bleibt, wodurch die Beschichtung hydrophil wird.

Bei der Herstellung eines derartigen, nicht-beschlagenden Elements wird somit auf das Substrat eine im Wesentlichen transparente Beschichtung aus einem photokatalytischen Material aufgebracht, das nach einer Photoanregung die Oberfläche des Elements hydrophil macht. Zum erstmaligen Einsatz eines derartigen nicht-beschlagenden Elements ist zudem noch eine so genannte Aktivierung der Beschichtung erforderlich. Beim Konzept nach der DE 296 23 901 U1 ist für diese Aktivierung die Bestrahlung der Beschichtung mit einer geeigneten Lichtquelle vorgesehen, wobei die Wellenlänge des verwendeten Lichts eine Energie aufweisen soll, die höher ist als die Bandlückenenergie des Photokatalysators. Alternativ ist ein Konzept zur Aktivierung einer Oberflächenschicht durch UV-Licht auch aus der EP 1 254 870 A2 bekannt. Sobald in Folge dieser Aktivierung die Oberfläche der photokatalytischen Beschichtung hydrophil oder super-hydrophil gemacht worden ist, bleibt die Hydrophilie der Oberfläche für eine bestimmte Zeitspanne auch dann erhalten, wenn das Substrat im Dunkeln aufbewahrt wird. Allerdings geht die Hydrophilie im Laufe der Zeit allmählich verloren, was insbesondere sich an den Hydroxylgruppen der Beschichtungsoberfläche anlagernden Verunreinigungen zugeschrieben wird. Die Hydrophilie und somit die Beschlagsfreiheit des Elements kann dabei jedoch auf vergleichsweise einfache Weise wieder hergestellt werden, indem die Oberfläche erneut einer Photoanregung unterworfen wird. Hinsichtlich dieser "Auffrischung" der Oberflächen-Hydrophilie sind die Anforderungen bei der Bestrahlung hinsichtlich Bestrahlungsintensität und -dauer deutlich geringer als bei der erstmaligen Aktivierung. Beispielsweise kann es bei der Verwendung eines derartigen nicht-beschlagenden Elements im Rückspiegel eines Kraftfahrzeugs für eine Re-Aktivierung der hydrophilen Oberflächenbeschichtung durchaus ausreichend sein, das Kraftfahrzeug über einen Zeitraum von einigen wenigen Stunden im Tageslicht zu bewegen, um die vollständige hydrophile Eigenschaft der Oberflächenbeschichtung wieder herzustellen.

Vergleichsweise aufwändig bei der Herstellung eines derartigen nicht-beschlagenden Elements ist jedoch der Aktivierungsschritt zur erstmaligen Aktivierung der photokatalytischen Oberflächenbeschichtung. Hierzu ist es in der Regel erforderlich, das Substrat nach dem Aufbringen der photokatalytischen Beschichtung über einen Zeitraum von mehreren Stunden mit einer Intensität von einigen hundert Watt pro Quadratmeter mit UV-Licht zu bestrahlen. Sowohl hinsichtlich der erforderlichen Behandlungszeit als auch hinsichtlich des mit der Behandlung verbundenen Energiebedarfs ist diese Aktivierung für einen industriellen Fertigungsprozess derartiger nicht-beschlagender Elemente, insbesondere in Großserienproduktion, daher vergleichsweise ungünstig.

Der Erfindung liegt daher die Aufgabe zugrunde, ein Verfahren zur Herstellung eines nicht-beschlagenden Elements der oben genannten Art anzugeben, das im Hinblick auf die für die Aktivierung der Oberflächenbeschichtung erforderliche Behandlungsdauer und den damit verbundenen Aufwand auch für eine Großserienproduktion besonders geeignet ist.

Diese Aufgabe wird erfindungsgemäß dadurch gelöst, dass die Oberflächenschicht bei der Durchführung des Aktivierungsschritts mit einer Gasflamme beflammt wird.

Dabei ist insbesondere vorgesehen, dass für die Aktivierung der Oberfläche während des Aktivierungsschritts hinsichtlich der Umgebungsbedingungen (beispielsweise Temperatur, Druck) und möglicher Reaktionspartner für die Oberflächenschicht geeignete Bedingungen eingestellt werden, so dass die mit der Aktivierung beabsichtigte Bereitstellung der Hydroxylgruppen an der Oberfläche in Folge chemischer Reaktionen erfolgen kann.

Die Erfindung geht dabei von der Überlegung aus, dass ein auch für die Großserienproduktion geeignetes Herstellungsverfahren besonders konsequent auf vergleichsweise kurze Behandlungszeiten einzelner Elemente und besonders gering gehaltenen Energieverbrauch hin ausgerichtet sein sollte. Wie sich überraschenderweise herausgestellt hat, ist die bisher für unumgänglich gehaltene Photoanregung der Oberflächenschicht zur Bereitstellung der Hydroxylgruppen grundsätzlich ersetzbar durch eine Vorbehandlung der Oberflächenschicht auf chemischer Basis, wobei durch geeignete Wahl von Reaktionspartnern und -bedingungen besonders kurze Behandlungszeiten eingestellt werden können. Daher ist die Durchführung des Aktivierungsschritts auf chemischer Basis vorgesehen, wobei die Oberflächenschicht reaktiv behandelt wird, indem die Behandlung der Beschichtung mit einer Gasflamme erfolgt.

Das Element könnte dabei im Wesentlichen vollständig aus dem photokatalytischen Material gebildet sein. Vorteilhafterweise ist die Oberflächenschicht jedoch durch eine auf einem Substrat aufgebrachte Beschichtung aus dem photokatalytischen Material gebildet, so dass insbesondere eine Verwendung als Kfz-Spiegel oder dergleichen in Betracht kommt. Das mit der Beschichtung versehene Substrat kann dabei insbesondere in der Art eines Zwischenprodukts auch einem nachträglichen Aktivierungsschritt unterzogen werden. Vorteilhafterweise wird das Verfahren zur Herstellung eines nicht beschlagenden Elements eingesetzt, bei dem auf dem Substrat eine im Wesentlichen transparente Beschichtung aus dem photokatalytischen Material aufgebracht wird, das nach einer Photoanregung die Oberfläche des Elements hydrophil macht.

Zur Aktivierung der Oberflächenbeschichtung über die Beflammung mit einer Gasflamme wird das mit dem photokatalytischen Material beschichtete Substrat vorteilhafterweise an der Gasflamme vorbeigeführt, wobei die Gasflamme derart positionert wird, dass die Flammenspitze geringfügig, vorzugsweise etwa 10 mm bis 20 mm, oberhalb der Substratoberfläche steht. Bedingt durch die oxidierenden Eigenschaften einer Gasflamme, dem Vorhandensein freier Radikale (z. B. Hydroxylradikale HO⁻, Hydroperoxylradikale HOO⁻ und Hydroperoxylradikalanionen HOO⁻) und dem bei der Verbrennung frei werdenden Wasserdampf werden nämlich beim direkten Kontakt der Flammenspitze mit der Substratoberfläche die besten Behandlungsergebnisse erwartet. Die Beaufschlagung des Substrats mit der Gasflamme erfolgt dabei bevorzugt auf der beschichteten Seite.

Eine besonders hohe Effektivität bei der Behandlung der beschichteten Substrate ist erreichbar, indem das Substrat vorteilhafterweise mit einer Geschwindigkeit zwischen 0,1 und 10 cm/s, bevorzugt bei etwa 2,5 cm/s, an der Gasflamme vorbeigeführt wird.

Vorzugsweise erfolgt das Beflammen der Oberfläche mittels einer Anzahl von Schlitzbrennern. Der oder die Gasbrenner werden vorteilhafterweise mit Luftüberschuss übertrieben, so dass die Brennerflamme blau geführt wird. Dazu wird der Gasflamme vorteilhafterweise ein Brenngasstrom und ein Oxidationsmittelstrom zugeführt, wobei das Mengenverhältnis geeignet eingestellt wird. Vorzugsweise wird dabei für das Verhältnis von Oxidationsmittelstrom, insbesondere Luft, und Brenngasstrom auf einen Wert von mehr als 10 eingestellt, so dass ein vergleichsweise deutlich ausgeprägter Luftüberschuss eingehalten wird.

Vorteilhafterweise wird der Aktivierungsschritt in Umgebungsatmosphäre oder unter Schutzgasatmosphäre durchgeführt.

Als besonders günstig für den beabsichtigten Einsatzzweck als photokatalytisches Material oder als hydrophile Oberflächen-Beschichtung hat sich hinsichtlich der Materialwahl Titandioxid (TiO₂) ergeben. Als photokatalytisches Material wird daher vorteilhafterweise auf das Substrat eine Titandioxid-Beschichtung aufgebracht.

Das nicht-beschlagende Element kann zu beliebigen Einsatzzwecken, beispielsweise als Windschutzscheibe in einem Kraftfahrzeug, als Fensterscheibe in der Außenfassade eines Gebäudes, als Verkehrsspiegel, als Linse oder dergleichen vorgesehen sein. In besonders bevorzugter Ausgestaltung wird jedoch als nichtbeschlagendes Element ein Spiegel, vorzugsweise zum Einsatz in einem Kraftfahrzeug, hergestellt.

Zur Aktivierung einer Oberflächenschicht aus einem photokatalytischen Material eines Elements kann eine Fördereinrichtung für das Element vorgesehen sein, der eine Einrichtung zur reaktiven Behandlung der Oberflächenschicht zugeordnet ist. Als Einrichtung zur reaktiven Behandlung des beschichteten Substrats ist eine Anzahl von Gasbrennern vorgesehen.

Der oder jeder Gasbrenner ist dabei vorzugsweise relativ zur Fördereinrichtung derart positioniert, dass die sichtbare Flammenspitze der Gasflamme geringfügig vorzugsweise etwa 10 mm bis 20 mm, oberhalb der Oberfläche eines vorbeigeführten Substrats steht. Damit ist sichergestellt, dass durch die oxidierenden Eigenschaften der Gasflamme, dem Vorhandensein freier Radikale und dem bei der Verbrennung frei werden Wasserdampf besonders zuverlässige und stabile, reproduzierbare Behandlungsergebnisse erreichbar sind.

Die Einrichtung kann durch eine geeignete Wahl der Fördereinrichtung zur sequentiellen Behandlung einer Vielzahl einzelner Elemente ausgestaltet sein. Insbesondere kann auch vorgesehen sein, vergleichsweise großflächige, in sich gewölbte oder gekrümmte Elemente, zu behandeln. Dabei kann es sich insbesondere um so genannte Kalotten, aus denen beispielsweise Außenspiegel für Pkw, für Lastkraftfahrzeuge oder Omnibusse hergestellt werden, handeln. Um bei derartigen Einsatzgebieten eine flächige gleichmäßige Aktivierung zu gewährleisten, ist vorzugsweise eine Mehrzahl von Gasbrennern vorgesehen, die hinsichtlich der Positionierung und Orientierung ihrer Austrittsöffnungen an eine für das Substrat vorgesehene Konturierung angepasst angeordnet sind. Insbesondere kann dabei eine Aktivierung von Kalotten vorgesehen sein, wobei mehrere Einzelbrenner entsprechend der Kontur der Kalotte angeordnet sind. Dabei kann durch ein Rotieren der Kalotten während der Beflammung eine zusätzliche Vergleichmäßigung der Aktivierung erreicht werden. Falls eine unterschiedliche Umfangsgeschwindigkeit der Kalotte (außen/innen) vorliegt, ist vorzugsweise eine Kompensation der daraus resultierenden Inhomogenitäten durch unterschiedliche Brennerintensitäten oder Zusatzbrenner vorgesehen.

Vorzugsweise wird eine Einrichtung zur reaktiven Behandlung eines Substrats, insbesondere ein Gasbrenner, zur Aktivierung einer auf einem Substrat aufgebrachten, im Wesentlichen transparenten Beschichtung aus einem photokatalytischen Material verwendet.

Die mit der Erfindung erzielten Vorteile bestehen insbesondere darin, dass durch die Aktivierung der Oberflächenschicht auf reaktivem Wege die mit der ansonsten erforderlichen Photo-Aktivierung einhergehenden Nachteile, insbesondere hinsichtlich des damit verbundenen Energiebedarfs und der erforderlichen Behandlungsdauer, vermieden werden können. Durch die reaktive Behandlung der Oberflächenschicht kann beispielsweise eine typische Durchlaufzeit des beschichteten Substrats durch die Aktivierungsanlage von etwa 3 h (bei einer Photo-Aktivierung durch UV-Bestrahlung) auf eine Behandlungszeit von etwa 6 s (reaktive Behandlung mittels Gasbeflammung) verringert werden. Der spezifische Energiebedarf für die Aktivierung kann bei der Herstellung von beschichteten Spiegeln für die Kraftfahrzeug-Industrie von etwa 200 Wattstunden pro Spiegel (Photoaktivierung durch UV-Bestrahlung) auf etwa 2 Wattstunden pro Spiegel (reaktive Behandlung durch Gasbeflammung) verringert werden, wobei der nach der Behandlung ermittelte, für das Maß der Hydrophilie charakteristische Kontaktwinkel ebenso wie dessen zeitliche Entwicklung nach Abschluss der Aktivierung für beide Fälle vergleichbar sind.

Ein Ausführungsbeispiel der Erfindung wird anhand einer Zeichnung näher erläutert. Darin zeigen:
- Fig. 1: schematisch eine Einrichtung zur Aktivierung eines mit einem photokatalytischen Halbleiter-Material beschichteten Substrats,
- Fig. 2: eine alternative Ausführungsform der Einrichtung nach Fig. 1, und
- Fig. 3: ein Diagramm mit der Abhängigkeit eines Kontaktwinkels von einem Mengenverhältnis.

Gleiche Teile sind in beiden Figuren mit denselben Bezugszeichen versehen.

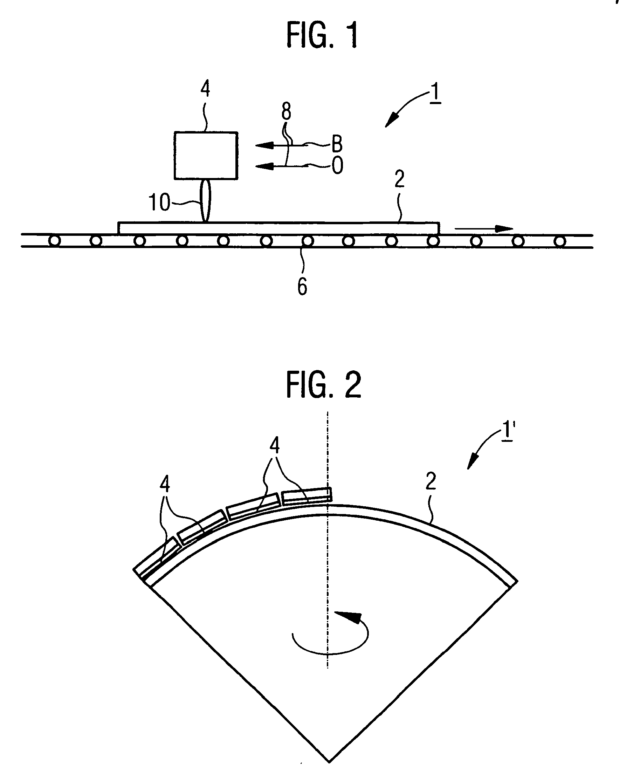

Die Einrichtung 1 nach Fig. 1 ist zur so genannten Aktivierung eines mit einem photokatalytischen Material beschichteten Substrats 2 vorgesehen. Das Substrat 2, das im Ausführungsbeispiel zur Anfertigung von Rückspiegeln für Kraftfahrzeuge vorgesehen ist und dementsprechend in seinem Grundkörper im Wesentlichen aus Glas besteht, ist dabei auf seiner Oberfläche mit einer Beschichtung versehen, die hydrophile oder super-hydrophile Eigenschaften aufweist und somit bei einer Benetzung mit Wasser einen vergleichsweise homogenen Wasserfilm bildet, der den Durchgang von Licht durch das Glas nur unwesentlich beeinträchtigt. Zu diesem Zweck wird das Substrat 2 vor seiner Zuführung zur Einrichtung 1 in an sich bekannter Weise mit einem photokatalytischen Halbleiter-Material, im Ausführungsbeispiel Titandioxid, beschichtet. Die Beschichtung kann dabei durch Sputtern, Bedampfen, Reaktiv Abscheidung aus der Gasphase (sog. CVD = Chemical Vapour Reposition), Sol-Gel-Beschichtung, etc. aufgebracht werden. Die Aufbringung der Beschichtung kann dabei insbesondere gemäß den in der DE 296 23 901 U1 oder in der EP 1 254 870 A2 beschriebenen Konzepten auf das Substrat 2 erfolgen, wobei die diesbezügliche Offenbarung der genannten Druckschriften ausdrücklich eingeschlossen wird.

Ein derartig mit einer Titandioxid-Beschichtung versehenes Substrat 2 weist grundsätzlich super-hydrophile Eigenschaften an der beschichteten Oberfläche auf. Diese bleibt für eine bestimmte Zeitspanne auch dann erhalten, wenn das Substrat 2 im Dunkeln aufbewahrt wird. Allerdings geht die Hydrophilie im Laufe der Zeit allmählich verloren, kann jedoch auf vergleichsweise einfache Weise wiederhergestellt werden, indem die Oberfläche einer Photoanregung beispielsweise durch Tageslicht unterworfen wird. Allerdings setzt die Entstehung der Super-Hydrophilie in der Oberfläche des beschichteten Substrats 2 und somit die Herstellung eines durch das beschichtete Substrat 2 gebildeten nicht-beschlagenden Elements voraus, dass das beschichtete Substrat 2 nach der Aufbringung der Titandioxid-Beschichtung einem so genannten Aktivierungsschritt unterworfen wird. Dabei muss in einem Behandlungsschritt vor dem erstmaligen Einsatz des Substrats 2 die Super-Hydrophilie der Oberflächenbeschichtung durch eine geeignete Behandlung eingestellt werden, wobei vermutet wird, dass bei diesem Schritt eine ausreichende Anzahl an Hydroxylgruppen in der Oberflächenbeschichtung bereitgestellt wird, die die gewünschte Superhydrophilität erzeugen können.

Zur Durchführung dieses Aktivierungsschritts am bereits beschichteten Substrat 2 und somit zur endgültigen Herstellung des nicht-beschlagenden Elements ist die Einrichtung 1 spezifisch ausgelegt. Die Einrichtung 1 ist dabei insbesondere für einen Einsatz in einer Großserienproduktion vorgesehen und dementsprechend hinsichtlich besonders kurzer Behandlungszeiten für die beschichteten Substrate 2 und vergleichsweise hohe Durchsatzraten bei nur begrenztem Energieaufwand ausgelegt. Um diese Auslegungsziele erreichen zu können, ist die Einrichtung 1 für das Konzept ausgelegt, die beschichteten Substrate 2 durch eine reaktive Behandlung zu aktivieren. Eine derartige reaktive Behandlung erfolgt auslegungsgemäß insbesondere dadurch, dass dem die Einrichtung 1 durchlaufenden beschichteten Substrat 2 durch geeignete Einstellung von Umgebungsbedingungen und -parametern reaktive Radikale oder Substanzen zugeführt werden, die in Folge chemischer Reaktionen über Oxidationen (mittels heißem Sauerstoff, HOO⁻, OH-Radikalen) die Oberfläche der Beschichtung von anhaftenden Verunreinigungen befreien und letztendlich eine ausreichende Anzahl von Hydroxylgruppen an der beschichteten Oberfläche erzeugen.

Eine derartige reaktive Behandlung könnte beispielsweise durch eine rein thermische Behandlung an geeignet gewählter Umgebungsatmosphäre oder auch durch Beaufschlagung mit einer Korona-Entladung erfolgen. Im Ausführungsbeispiel ist die Einrichtung 1 jedoch dafür ausgelegt, die auf dem Substrat 2 aufgebrachte Oberflächenbeschichtung zur Durchführung des Aktivierungsschritts mit einer Gasflamme zu behandeln. Dazu umfasst die Einrichtung 1 als Einrichtung zur reaktiven Behandlung des beschichteten Substrats 2 einen Gasbrenner 4. Diesem ist eine Fördereinrichtung 6 für das beschichtete Substrat 2 zugeordnet, über die das beschichtete Substrat 2 geeignet am Gasbrenner 4 vorbeigeführt werden kann.

Wie durch die Pfeile 8 angedeutet, ist dem Gasbrenner 4 sowohl ein Brenngas B als auch ein Oxidationsmittel O zuführbar. Als Brenngas B kann dabei beispielsweise Methan, Ethan, Ethylen, Acetylen, Propan, Butan, Erdgas, Wasserstoff, Gemischen oder dergleichen vorgesehen sein.

Die Betriebsparameter das Gasbrenners 4 werden beim Betrieb der Einrichtung 1 insbesondere derart eingestellt, dass ein besonders guter Behandlungserfolg am beschichteten Substrat 2 erzielt wird. Dabei wird u. a. der Erkenntnis Rechnung getragen, dass durch die oxidierenden Eigenschaften der Brennerflamme 10, das Vorhandensein freier Radikale und den bei der Verbrennung frei werdenden Wasserdampf beim direkten Kontakt der Flammenspitze mit der Substratoberfläche die besten Behandlungsergebnisse erwartet werden. Im Hinblick darauf ist der Gasbrenner 4 relativ zur Fördereinrichtung 6 derart positioniert, dass die Flammenspitze der Brennerflamme 10 etwa 15 mm oberhalb der Oberfläche des vorbeigeführten Substrats 2 steht. Bei einer derartigen Konstellation gelingt beispielsweise die Reinigung von gering verschmutzten Oberflächen, die beispielsweise einer Vorreinigung durch eine geeignete Wascheinrichtung unterworfen wurden, bereits in wenigen Sekunden.

In der alternativen Ausführungsform nach Fig. 2 ist die Einrichtung 1' für eine Behandlung eines konturiert vorliegenden Substrats 2, also beispielsweise einer Kalotte, ausgelegt. Um dabei in vergleichsweise kurzer Behandlungszeit eine vergleichsweise große Oberfläche zuverlässig behandeln zu können, ist bei der Einrichtung 1' eine Mehrzahl von Gasbrennern 4 vorgesehen, die hinsichtlich der Positionierung ihrer Austrittsöffnungen an die für das Substrat 2 vorgesehene Konturierung angepasst angeordnet sind. Beim Betrieb der Einrichtung 1' ist ein Rotieren der Kalotten während der Beflammung vorgesehen, so dass flächig eine besonders gleichmäßige Aktivierung erreicht wird. Eine evtl. vorliegende unterschiedliche Umfangsgeschwindigkeit der Kalotte wird dabei gegebenenfalls durch entsprechend eingestellte unterschiedliche Brennerintensitäten oder in Fig. 2 nicht näher dargestellte Zusatzbrenner kompensiert.

Um einen besonders günstigen Behandlungserfolg zu gewährleisten, sind bei der Einrichtung 1 und auch bei der Einrichtung 1' die Gaszuflüsse des Brenngases B und des Oxidationsmittels O jeweils getrennt einstellbar, so dass betriebspunktabhängig ein besonders günstiges Verhältnis der beiden Gasströme eingestellt werden kann. Für besonders gute Behandlungsergebnisse wird dieses Mengenverhältnis derart eingestellt, dass die Brennerflamme blau geführt, also mit Luftüberschuss, betrieben wird. Das Substrat 2 wird mit einer Geschwindigkeit zwischen 0,1 und 10 cm/s, bevorzugt bei etwa 2,5 cm/s, an der Brennerflamme 10 vorbeigeführt.

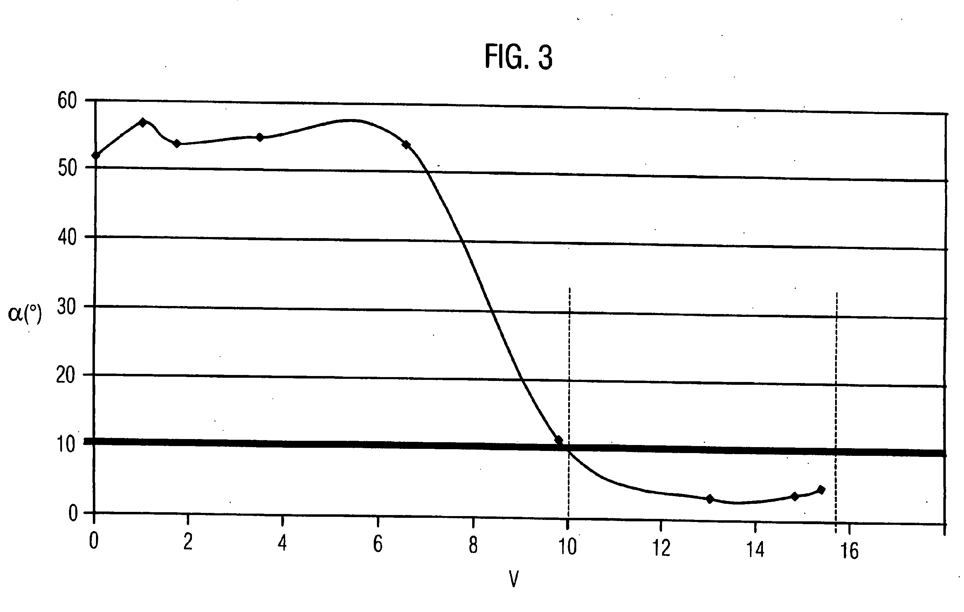

Zur Verdeutlichung der dabei erhältlichen Ergebnisse ist in Figur 3 in Form eines Diagramms die Abhängigkeit des sogenannten Kontaktwinkels α vom Verhältnis V zwischen Oxidationsmittelstrom (oder Luftstrom) und Brenngasstrom dargestellt. Der Kontaktwinkel α, der dabei als Maß für die Hydrophilie des beschichteten Substrats 2 hergezogen wird, ist dabei derjenige Winkel, den der Rand eines sich auf der Elementoberfläche befindlichen Wassertropfens mit der Elementoberfläche bildet. Im Falle unbeschichteter Gläser beträgt dieser Randwinkel üblicherweise etwa zwischen 40° und 60°. Von einer hydrophilen Oberfläche wird demgegenüber dann gesprochen, wenn der Randwinkel kleiner als etwa 20° ist. Bei großen Randwinkeln von beispielsweise mehr als 100° spricht man hingegen von hydrophoben Oberflächen. Die so genannte Super-Hydrophilie liegt hingegen vor, wenn der Rand- oder Kontaktwinkel weniger als etwa 10°, vorzugsweise weniger als etwa 5°, beträgt.

Dieser Kontaktwinkel α ist dabei im Diagramm nach Fig. 3 in Abhängigkeit vom Verhältnis V für ein Beschichtungssystem aufgetragen, bei dem als Gasbrenner 4 ein Bandbrenner mit der Typenbezeichnung SK 02-380 - 003 der Fa. Webber mit einem Brennkörper aus Stahlguß, Flammenstreifen aus Edelstahllamellen und einer Breite von 200 mm zum Einsatz kommt, der mit Erdgas unter einem Vordruck von 70 mbar und Luft unter einem Vordruck vom 6 bar betrieben werden kann. Wie den im Diagramm wiedergegebenen Ergebnissen entnehmbar ist, sinkt der Kontaktwinkel α ab einem Verhältniswert V von etwa 10, also deutlichem Luftüberschuss, auf Werte von unter etwa 10 ° ab, so dass so genannte Super-Hydrophilie der beschichteten Substrate 2 erreichbar ist.

### Bezugszeichenliste

- 1,1': Einrichtung
- 2: Substrat
- 4: Gasbrenner
- 6: Fördereinrichtung
- 8: Pfeile
- 10: Brennerflamme

- B: Brenngas
- O: Oxidationsmittel
- V: Verhältnis
- α: Kontaktwinkel

## Patentansprüche

1. Verfahren zur Herstellung eines Elements, bei dem eine Oberflächenschicht aus einem photokatalytischen Material einem Aktivierungsschritt unterzogen wird,
**dadurch gekennzeichnet,**
**dass** die Oberflächenschicht bei der Durchführung des Aktivierungsschritts mit einer Gasflamme beflammt wird.

2. Verfahren nach Anspruch 1, bei dem die Oberflächenschicht durch eine auf ein Substrat (2) aufgebrachte Beschichtung aus dem photokatalytischen Material gebildet ist.

3. Verfahren nach Anspruch 2, bei dem die Aktivierung über eine Behandlungszeit von etwa 6 s vorgenommen wird.

4. Verfahren nach Anspruch 2 oder 3, bei dem das mit dem photokatalytischen Material beschichtete Substrat (2) an der Gasflamme vorbeigeführt wird, wobei die Gasflamme derart positioniert wird, dass der sichtbare Teil der Flammenspitze etwa 10 mm bis 20 mm oberhalb der Substratoberfläche steht.

5. Verfahren nach einem der Ansprüche 2 bis 4, bei dem das Substrat mit einer Geschwindigkeit zwischen 0,1 und 10 cm/s, bevorzugt von etwa 2,5 cm/s, an der Gasflamme vorbeigeführt wird.

6. Verfahren nach einem der Ansprüche 1 bis 5, bei dem der Gasflamme ein Brenngasstrom und ein Oxidationsmittelstrom zugeführt werden.

7. Verfahren nach einem der Ansprüche 1 bis 6, bei dem der Aktivierungsschritt in Umgebungsatmosphäre oder unter Schutzgasatmosphäre durchgeführt wird.

8. Verfahren nach einem der Ansprüche 1 bis 7, bei dem als photokatalytisches Material Titandioxid vorgesehen ist.

9. Verfahren nach einem der Ansprüche 1 bis 8, bei dem als nicht beschlagendes Element ein Spiegel, vorzugsweise als Verkehrsspiegel, hergestellt wird.

10. Verfahren nach Anspruch 9, bei dem ein Spiegel zum Einsatz in einem Kraftfahrzeug hergestellt wird.

11. Verwendung (1, 1') eines Gasbrenners (4) zur reaktiven Behandlung eines Substrats (2), zur Aktivierung einer auf dem Substrat (2) aufgebrachten, im Wesentlichen transparenten Beschichtung aus einem photokatalytischen Material.

## Claims

1. A process for production of an element, in which a surface layer made of a photocatalytic material is subjected to an activation step,
**characterized in**
**that** during the execution of the activation step, the surface layer is flame-treated with a gas flame.

2. The process according to claim 1, in which the surface layer is formed of the photocatalytic material through a coating applied on a substrate (2).

3. The process according to claim 2, in which the activation is effected during a treatment time of approximately 6 s.

4. The process according to claim 2 or 3, in which the substrate (2) coated with the photocatalytic material is moved past the gas flame, the gas flame being positioned such that the visible part of the flame tip is situated about 10 mm to 20 mm above the substrate surface.

5. The process according to any of claims 2 to 4, in which the substrate is moved past the gas flame at a speed between 0.1 and 10 cm/s, preferably of about 2.5 cm/s.

6. The process according to any of claims 1 to 5, in which a burnable-gas stream and an oxidizing-agent stream are fed to the gas flame.

7. The process according to any of claims 1 to 6, in which the activation step is carried out in the ambient atmosphere or in an inert-gas atmosphere.

8. The process according to any of claims 1 to 7, in which titanium dioxide is provided as photocatalytic material.

9. The process according to any of claims 1 to 8, in which the anti-fogging element produced is a mirror, preferably a traffic mirror.

10. The process according to claim 9, in which a mirror is produced for use in a motor vehicle.

11. Use (1, 1') of a gas burner (4) for reactive treatment of a substrate (2), for activation of a substantially transparent coating made of a photocatalytic material applied on the substrate (2).

## Revendications

1. Procédé de fabrication d'un élément, dans lequel une couche superficielle faite d'un matériau photocatalytique est soumise à un pas d'activation,
**caractérisé en ce**
**que** la couche superficielle, pendant la réalisation du pas d'activation, est traitée à la flamme avec une flamme de gaz.

2. Procédé selon la revendication 1, dans lequel la couche superficielle est formée du matériau photocatalytique moyennant un revêtement appliqué sur un substrat (2).

3. Procédé selon la revendication 2, dans lequel l'activation est effectuée durant un temps de traitement d'environ 6 s.

4. Procédé selon la revendication 2 ou 3, dans lequel le substrat (2) revêtu du matériau photocatalytique est passé devant la flamme de gaz, la flamme de gaz étant positionnée de façon que la partie visible de la pointe de la flamme se trouve environ 10 mm à 20 mm au-dessus de la surface du substrat.

5. Procédé selon l'une quelconque des revendications 2 à 4, dans lequel le substrat est passé devant la flamme de gaz à une vitesse entre 0,1 et 10 cm/s, de préférence d'environ 2,5 cm/s.

6. Procédé selon l'une quelconque des revendications 1 à 5, dans lequel un courant de gaz combustible et un courant d'agent d'oxydation sont alimentés à la flamme de gaz.

7. Procédé selon l'une quelconque des revendications 1 à 6, dans lequel le pas d'activation est réalisé dans l'atmosphère ambiente ou dans une atmosphère de gaz inerte.

8. Procédé selon l'une quelconque des revendications 1 à 7, dans lequel dioxyde de titane est prévu comme matériau photocatalytique.

9. Procédé selon l'une quelconque des revendications 1 à 8, dans lequel l'élément antibué fabriqué est un miroir, de préférence, un miroir de trafic.

10. Procédé selon la revendication 9, dans lequel un miroir est fabriqué pour utilisation dans un véhicule à moteur.

11. Utilisation (1, 1') d'un bec de gaz (4) pour traitement réactif d'un substrat (2), pour l'activation d'un revêtement essentiellement transparent fait d'un matériau photocatalytique appliqué sur le substrat (2).
